# EUROPEAN PATENT APPLICATION

(11) **EP 1 505 708 A1**
(43) Date of publication of application: **09.02.2005**
(21) Application number: 03723348.3
(22) Date of filing: 13.05.2003
(51) Int. Cl.: H02J 7/00, H02J 7/34

(54) **CORDLESS DEVICE SYSTEM**

(30) Priority: 13.05.2002 JP 2002137773; 08.11.2002 JP 2002324677
(71) Applicant: Sun Bridge Corporation, Nakagami-gun, Okinawa 904-0117 (JP)
(72) Inventor: TAKARA, Ken, c/o SUN BRIDGE CORPORATION, Nakagami-gun, Okinawa 904-0117 (JP); MUSHIAKE, Naofumi, c/o SUN BRIDGE CORPORATION, Nakagami-gun, Okinawa 904-0117 (JP); MATSUBARA, Akira, c/o SUN BRIDGE CORPORATION, Nakagami-gun, Okinawa 904-0117 (JP); IKEUCHI, Toyota, c/o SUN BRIDGE CORPORATION, Nakagami-gun, Okinawa 904-0117 (JP)
(74) Representative: Röhl, Wolf Horst, Dipl.-Phys., Dr.
(86) International application number: PCT/JP2003/005954
(87) International publication number: WO 2003/096513

(57) **Abstract**

A cordless instrument (20, 40) detachable from a charger (10, 30, 31) is attached to the charger (10, 30, 31), and is charged. A first storage part (12, 33) chargeable from a direct current source (11, 32) included in the charger (10, 30, 31), a first charge and discharge control circuit (13, 50) to control charge and discharge of the first storage part (12, 33), a second storage part (21, 43) included in the cordless instrument (20, 40), and a second charge and discharge control circuit (22, 45) to control charge and discharge of the second storage part (21, 43) are provided. Further, a third storage part (28) chargeable from the direct current source (11, 32) may be provided. Also to the cordless instrument (20, 40), a fourth storage part (44) may be provided. Upon attaching the cordless instrument, the second storage part (21, 43) is charged at least from the first storage part (12, 33). In comparison with charging time to conventional secondary batteries, it is capable of rapid charge, long life use, resulting in such merits as to realize the compact size of a charger and low cost.

## Description

### Technical Field

The present invention relates to a cordless instrumental system, in which a cordless instrument detachable from a charger is attached to said charger an charged therefrom, such as portable electrical instruments, personal computers, cell phones, and portable informational instruments such as PDA.

### Background Art

Among the cordless instruments, such have so far been rapidly increasing as are made cordless with built-in batteries. As built-in batteries, disposable primary batteries like dry cells and repeatedly usable secondary batteries are mainly used. However, primary batteries require laborious procedure to exchange upon potential extinction, and time for purchasing new ones. Disposition of consumed cells is also a problem. For this reason, costs for cells and maintenance are needed for such instruments as electric torches for business.

As for secondary batteries, in case that electricity was discharged when it is to be used, it has to be charged long with relatively low current for the characteristics of secondary batteries of utilizing chemical reactions, therefore it can not be used while being charged. Secondary batteries can be repeatedly charged and discharged which is not possible for primary batteries, but it has its own limit, and exchange is necessary upon life extinction. In such a case, same problems as with the above-mentioned primary batteries are encountered.

Therefore, it is under consideration to utilize an electric double-layer capacitor in place of a secondary batteries by making use of the merit of high current charging and discharging of said electric double-layer capacitor. An electric double-layer capacitor has the structure to store the positive and the negative charges parallelly in the electric double layer generated upon the contact of an electrode and electrolyte. Since it is not accompanied by chemical reaction like batteries, rapid charge and discharge are possible. However, an electric double-layer capacitor has the smaller capacity per volume than that of secondary batteries, therefore it is severely restricted on operating time and the purpose of use.

The conventional construction of the instruments using an electric double-layer capacitor is such as to charge the instrument having an electric double-layer capacitor with, for example, an electric charger. Said electric charger is operated with alternate current source. Now, as instruments having the electric source with an electric double-layer capacitor, prototype electric cars are manufactured in which an electric double-layer capacitor with large volume can be mounted with the same capacity as the conventional secondary batteries. Also an electric double-layer capacitor of small capacity is used as the backup source for semiconductor memory devices for computers, in case that the capacity of a secondary battery is too large.

Further there is an electric charger using a direct current source rectified from commercial power source for cordless instruments using electric double-layer capacitors, as disclosed in, for example, Japanese publication JP H08-31339 B (p.2 - 5, Fig. 1 - 3). However, since conventional cordless instruments have an electric double-layer capacitor as a sole electric source, they have a problem that their volume is larger than the secondary batteries of equal capacity for long operation time.

Thus, there is a problem that a conventional secondary battery can not be replaced with an electric double-layer capacitor having the smaller capacity per volume than said secondary batteries for small cordless instruments and the like.
Taking into consideration the above-mentioned aspects, the present invention has the object to provide a cordless instrumental system capable of rapid charging effectively and efficiently.

### Disclosure of the Invention

In order to achieve the above-mentioned object, the first aspect of the present invention is a cordless instrumental system, in which a cordless instrument detachable from a charger is attached to said charger and charged, comprising: a first storage part chargeable from a direct current source included in said charger; a first charge and discharge control circuit to control the charge and discharge of said first storage part, a second storage part included in said cordless instrument; and a second charge and discharge control circuit to control the charge and discharge of said second storage part; and is capable of charging at least from said first storage part to said second storage part upon attaching said cordless instrument.

Said first and second storage parts are preferably constructed with an electric double-layer capacitor or an electrochemical capacitor. Also said second storage part is preferably capable of charging from said first storage part or said direct current source.

It is preferable to constitute the charging circuit for said second storage part so as to be switched to said first storage part or said direct current source. Also, said second charge and discharge control circuit is preferably included in said cordless instrument or said charger. Further, said first storage part is preferably connected parallelly in plurality to said direct current source.

According to said first aspect of the present invention, the first storage part is charged in advance from the direct current source built in a charger, and, upon connecting the cordless instrument, the storage part of the cordless instrument is first charged from the storage part of the charger. Then, in case that the voltage has not reached the rated value, the circuit is switched to the supply from the direct current source, charge is continued from the direct current source till the rated voltage is reached, and then charging is finished. Since the storage part of the cordless instrument of the present invention is preferably provided with an electrochemical capacitor, rapid charging is possible, as well as it is applicable to various cordless instruments, since its volume is smaller than the conventional electric double-layer capacitor.

The charge and discharge control circuit of the second storage part can be allocated not at the charger side but at the cordless instrument side. If the storage part of a charger of the present invention is constituted with an electric double-layer capacitor or an electrochemical capacitor, then rapid charge of the storage part of a charger is also possible. Also, the second storage part of a charger is, by being connected parallelly in plurality to a direct current source, capable of switched use, and of immediate full charging by switching in turn when the cordless instrument is connected. Thus, the cordless instrumental system always capable of rapid charging can be realized.

In order to achieve the above-mentioned object, the second aspect of the present invention is a cordless instrumental system, in which a cordless instrument detachable from a charger is attached to said charger and charged, characterized to comprise: a first storage part chargeable from a direct current source included in said charger; a third storage part chargeable from the direct current source, and chargeable to said first storage part; a first charge and discharge control circuit to control charge and discharge of said first and third storage parts; a second storage part included in said cordless instrument; and a second charge and discharge control circuit to control charge and discharge of said second storage part; and is capable of charging at least from said first storage part to said second storage part upon attaching said cordless instrument.

In said cordless instrumental system of the second aspect, said first and second storage parts are preferably constituted with an electric double-layer capacitor or an electrochemical capacitor. Said third storage part is preferably constituted with a battery capable of charge and discharge. The third storage part can be charged from said direct current source. Said second storage part is preferably capable of charging from said first storage part or said direct current source.

In said cordless instrumental system of the second aspect, depending upon the charge output of said first storage part, the charge route to said second storage part can be switched to the first storage part or said direct current source. Said second charge and discharge control circuit is preferably included in said cordless instrument or said charger. Further, said first storage part is preferably connected parallelly in plurality to said direct current source.

According to said second aspect of the present invention, the first and the third storage parts are charged in advance from the direct current source built in a charger, and, upon connecting the cordless instrument, the storage part of the cordless instrument is first charged from the first storage part of the charger. At this point, the first storage part is charged from the third storage part so as to immediately compensate from the third storage part the electricity discharged from the first storage part. As a result, no voltage lowering occurs in the first storage part, the voltages between the first and the second storage parts do not approach equal, and a certain potential difference is maintained. Consequently, rapid charge from the first to the second storage parts is made possible.

Here, in case that the voltage has not reached the rated value in the second storage part at this point, the circuit can be switched to the supply from the direct current source, charge is continued from the direct current source till the rated voltage is reached, and then charging is finished. According to the present invention, no voltage lowering occurs in the first storage part, the voltages between the first and the second storage parts do not approach equal, thereby a certain potential difference is maintained, and thus it is effectively applicable to various cordless instruments by rapid charge from the first to the second storage parts.

The charge and discharge control circuit of the second storage part can be allocated not at the charger side but at the cordless instrument side. If the first storage part of a charger of the present invention is constituted with an electric double-layer capacitor or an electrochemical capacitor, then rapid charge of the storage part of a charger is also possible. The first storage part of a charger is, by being connected parallelly in plurality to a direct current source, capable of supplying large current, and of immediate full charge. Also, the switched use is possible, and thereby the immediate full charging is also possible by switching in turn, when the cordless instrument is connected. Thus, the cordless instrumental system always capable of rapid charging can be realized. Also, the third storage part has the function to immediately supply electricity when the first storage part is discharged. Accordingly, the first storage part can always maintain the required voltage, and the charge speed can be always maintained above a certain value.

In order to achieve the above-mentioned object, the third aspect of the present invention is a cordless instrumental system, in which a cordless instrument detachable from a charger is attached to said charger and charged, characterized to comprise: a first and the third storage parts chargeable from said direct current source, and provided in said charger; a second and the fourth storage parts included in said cordless instrument; a charge and discharge control circuit to control charge and discharge of said first to fourth storage parts; and a discharge control circuit to control discharge of said second and fourth storage parts; and is capable of charging at least from said first and third storage parts to said second storage part, as well as of charging from said third storage part to said fourth storage part, upon attaching said cordless instrument.

According to said third aspect of the present invention, the first and the third storage parts are charged in advance from the direct current source built in a charger. Upon connecting the cordless instrument, the second storage part of the cordless instrument is first charged from the combined source of the first and the third storage parts connected in series in a charger. When the second storage part is rapidly charged to full capacity, charging of the fourth storage part follows. The second storage part is that capable of rapid charge, and the fourth storage part is a conventional chargeable and dischargeable battery, and charged at the conventional speed. Therefore, taking into consideration the case where the charging time has some additional allowance, the fourth battery may be charged from the third battery so far as the time allows after the rapid charging to the second storage part is completed.

Here, by constituting the first storage part of a charger with an electric double-layer capacitor or an electrochemical capacitor, it is also possible to rapidly charge the storage part of a charger. Also, the second storage part of a cordless instrument is capable of rapid charge by adopting an electric double-layer capacitor or an electrochemical capacitor. Further, since the fourth storage part is provided to a cordless instrument, the second storage part need not begin to be used immediately after the completion of rapid charge, therefore if there is additional allowance of time, the object of charge may be switched to the fourth storage part, and may be charged so far as the time allows. Thus, the cordless instrumental system, capable of rapid charging and long life, and the repeated charge and discharge, can be realized.

### Brief Description of Figures

The present invention will better be understood from the following detailed description and the drawings attached hereto showing certain illustrative forms of embodiment of the present invention. In this connection, it should be noted that such forms of embodiment illustrated in the accompanying drawings hereof are intended in no way to limit the present invention but to facilitate an explanation and an understanding thereof in which drawings:
Fig. 1 is a diagonal view illustrating a concrete structural example of the cordless instrumental system in accordance with an embodiment of the present invention;
Fig. 2 is an internal structural view of a charger in accordance with the first embodiment of the present invention;
Fig. 3 is a view illustrating an internal structure of an inductor as a cordless instrument in accordance with the first embodiment of the present invention;
Fig. 4 is a block diagram illustrating a structural example of a cordless instrumental system in accordance with the first embodiment of the present invention;
Fig. 5 is a block diagram illustrating a structural example of a cordless instrumental system in accordance with the second embodiment of the present invention;
Fig. 6 is a block diagram illustrating a structural example of a cordless instrumental system in accordance with the third embodiment of the present invention;
Fig. 7 is a block diagram illustrating a structural example of a cordless instrumental system in accordance with the fourth embodiment of the present invention;
Fig. 8 is a block diagram illustrating a modified example of a cordless instrumental system in accordance with the present invention;
Fig.9 is an internal structural view of a charger in accordance with the fifth embodiment of the present invention;
Fig. 10 is a block diagram illustrating a structural example of a cordless instrumental system in accordance with the fifth embodiment of the present invention;
Fig. 11 is a block diagram illustrating a structural example of a cordless instrumental system in accordance with the sixth embodiment of the present invention;
Fig. 12 is a block diagram illustrating a structural example of a cordless instrumental system in accordance with the seventh embodiment of the present invention;
Fig. 13 is a block diagram illustrating a structural example of a cordless instrumental system in accordance with the eighth embodiment of the present invention;
Fig. 14 is a block diagram illustrating a modified example of a cordless instrumental system in accordance with the present invention;
Fig. 15 is an external diagonal view illustrating a concrete structural example of a cordless instrumental system in accordance with the ninth embodiment of the present invention;
Fig. 16 is an explanatory view of the internal outline of a charger of Fig. 15;
Fig. 17 is a structural view of the internal outline of an induction rod of Fig. 15;
Fig. 18 is a block diagram illustrating a structural example of a cordless instrumental system in accordance with the ninth embodiment of the present invention;
Fig. 19 is a flowchart illustrating the processing of a charge and discharge control circuit controlling the charge of the first and the third storage parts of a cordless instrumental system in accordance with the ninth embodiment of the present invention; and
Fig. 20 is a flowchart illustrating the processing of a charge and discharge control circuit controlling the charge of the second and the fourth storage parts of a cordless instrumental system in accordance with the ninth embodiment of the present invention.

### Best Modes for Carrying Out the Invention

Hereinafter, certain forms of embodiment of the present invention will be described in detail with reference to the drawing figures.

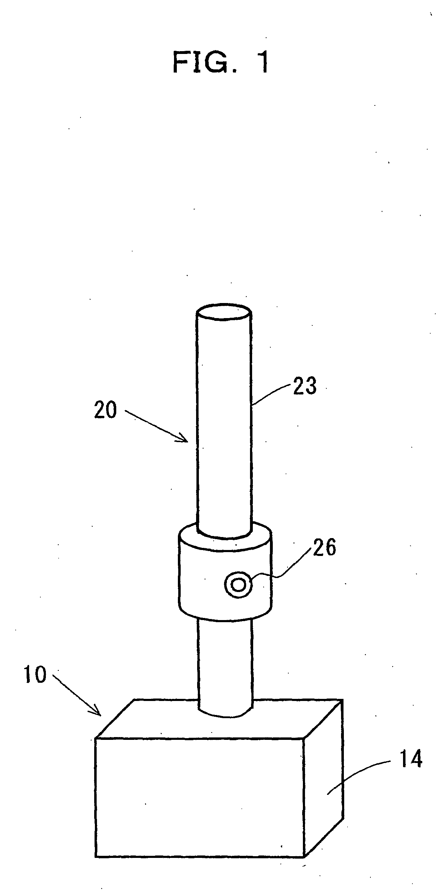

Fig. 1 illustrates a concrete structural example of the cordless instrumental system in accordance with the first embodiment of the present invention. The cordless instrument in said embodiment is so constituted as to have an induction rod 20 detachable from a charger 10, and to be charged with said induction rod being attached to the charger 10.

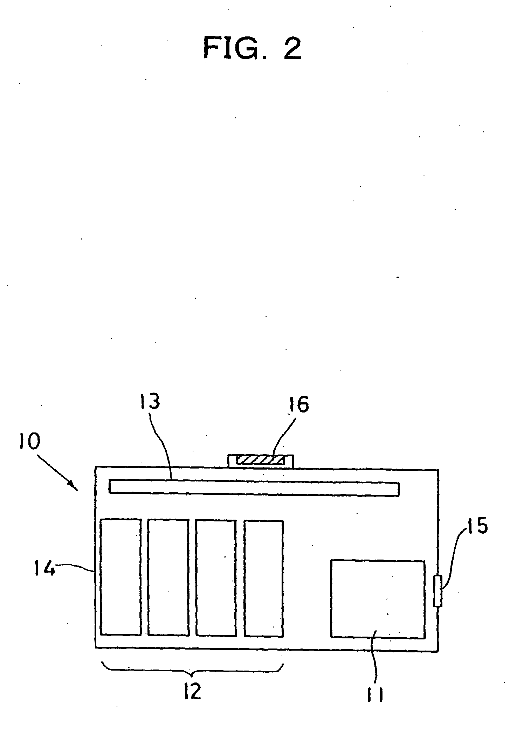

Fig. 2 illustrates a structural example of a charger 10. The charger 10 comprises a direct current source 11 to generate direct current by being supplied with electricity from a domestic power source or the like, a storage part (a first storage part) 12 chargeable from said direct current source 11, and a charge and discharge control circuit (a first charge and discharge control circuit) 13 to control charge and discharge of said storage part 12. Said components are allocated in a box 14, and the direct current source 11 is supplied with electricity from a terminal 15. At the top of the box 14 is provided a charge terminal 16 connected to the induction rod 20.

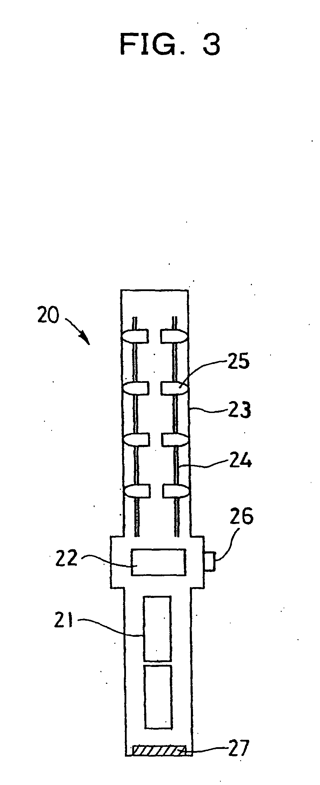

Fig. 3 illustrates a structural example of an induction rod 20. The induction rod 20 is shaped as a stick, and includes a storage part (a second storage part) 21 and a charge and discharge control circuit (a second charge and discharge control circuit) 22 to control charge and discharge of said storage part 21. Inside a luminous part 23 are provided a plurality of light sources (LED, for example) 25 by a retainer 24. LED 25 is switched on and off with operation of a switch 26. Beneath the induction rod 20 is provided a charge terminal 27 connected to the charger 10.

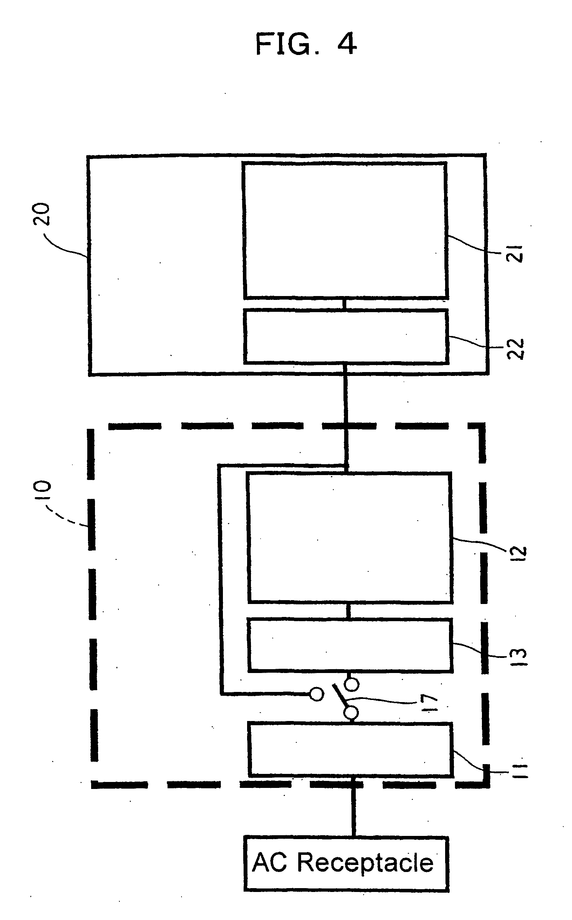

Fig. 4 illustrates a structure of a cordless instrumental system including a charger 10 and an induction rod 20. The storage part 21 of said induction rod 20 is constituted with an electrochemical capacitor. The electrochemical capacitor used here is also called a pseudo-capacity capacitor, and is that utilizing the pseudo-capacity by redox reaction with the oxides RuO2 and IrO2 of the platinoid elements Ru (rutenium) and Ir (iridium) as electrodes. The capacity twice as large or even more than that per unit volume of an electric double-layer capacitor has already been realized in practical use. The chargeability and dischargeability of large current are equal to those of an electric double-layer capacitor.

As the electrochemical capacitor in the storage part 21, two of the voltage 2.3V - 120F were connected in parallel in this example. The direct current source 11 of the charger 10 is 12V, 5A, and the electric double-layer capacitor of the storage part 12 is five of 2.3V - 60F connected in series as a unit, and further 4 of these units connected in parallel and is 11.5V - 48F (hereinafter, such series-parallel connection is simply called 5 series/4 parallel).

The first charge and discharge control circuit 13 and the second charge and discharge control circuit 22 control the voltage not to exceed the preset voltage (rated voltage) (overvoltage control function) upon charging the storage parts 12 or 21, respectively, and also control the preset voltage to be maintained (constant voltage control function) upon discharging from the storage parts 12 or 21.

In the above-mentioned aspect, the storage part 12 of the charger 10 is charged in advance from the direct current source 11. By providing the induction rod 20 to the charger 10, the charge terminals 16 and 27 are connected. At first the charged electricity in the storage part 12 of a charger 10 is charged rapidly into the storage part 21 of the induction rod 20. According to this embodiment, the storage part 21 was a fully charged state in 10 seconds, and could be used for 3 hours.

Upon charging from the storage part 12 of the charger 10, when the storage part 21 does not reach to the rated voltage, the charge circuit is switched with the switch 17 to charging from the direct current source 11, and electricity keeps supplied from the direct current source 11 until reaching to the rated voltage, and the charge is completed. In this case, the switching timing from the charge from the storage part 12 of a charger 10 to the direct current source 11 is preferably right before the current value of the storage part 12 becomes below the rated current value of the direct current source 11.

In the above-mentioned case, only an electric double-layer capacitor (or an electrochemical capacitor) is the storage part 12 of a charger 10, and since an electric double-layer capacitor (or an electrochemical capacitor) of large capacity is needed to charge the storage part 21 at the cordless instrument side, the charger 10 is made large in scale, and the cost is raised in some cases. On the other hand, in case that the capacity of an electric double-layer capacitor (or an electrochemical capacitor) is made small, the direct current source 11 of large capacity is needed to charge the storage part 21 at the cordless instrument side. Therefore, the capacities of the storage part 12 and the direct current source 11 are to be in appropriate combination depending on the charging condition.

Also, in comparison of the storage part 21 at the cordless instrument side and the storage part 12 of a charger 10, the voltage of the storage part 12 of a charger 10 is preferably higher. The larger the voltage difference, the higher is the charging speed. As for capacity, that of the storage part 12 of a charger 10 is preferably higher, but it is no problem unless extremely smaller, for additional charging is possible from the direct current source 11.

In comparison of the direct current source 11 and the storage part 12 built in a charger 10, the voltage of the direct current source 11 is preferably higher than the charge voltage of the storage part 12. Its current value is preferably 2 to 50A, and more preferably 5 to 30A. If it is lower than 2A, the charging time to the storage part 12 built in a charger 10 or the storage part 21 at the cordless instrument side becomes long. If higher than 50A, the electric source becomes large in scale resulting in high cost.

(Second Embodiment) Next, the second embodiment of the present invention is explained.

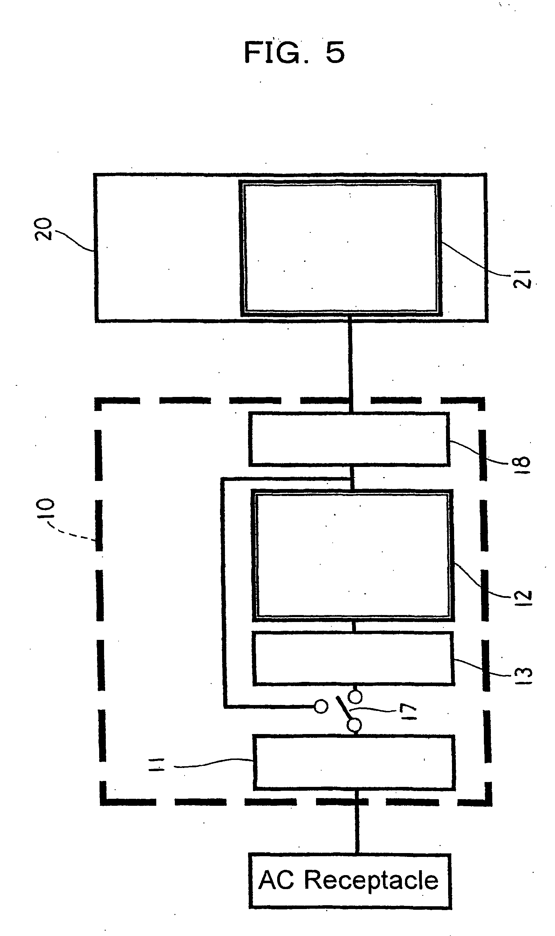

Fig. 5 illustrates the structure of a cordless instrumental system including a charger 10 and an induction rod 20 in accordance with the second embodiment. As the electrochemical capacitor in the storage part 21, two of the voltage 2.3V - 120F were connected in parallel. The direct current source 11 of the charger 10 is 12V, 5A, and the electric double-layer capacitor of the storage part 12 is 5 series/4 parallel of 2.3V - 60F, and is 11.5V - 48F. Especially in this case, the second charge and discharge control circuit 18 is included in the charger 10.

In the second embodiment, the storage part 12 of a charger 10 is charged in advance from the direct current source 11. By attaching the induction rod 20 to the charger 10, the charge terminals 16 and 27 are connected. At first the charged electricity in the storage part 12 of a charger 10 is charged rapidly into the storage part 21 of the induction rod 20. According to this embodiment, the storage part 21 was a fully charged state in 10 seconds, and could be used for 3 hours.

(Third Embodiment) Next, the third embodiment of the present invention is explained.

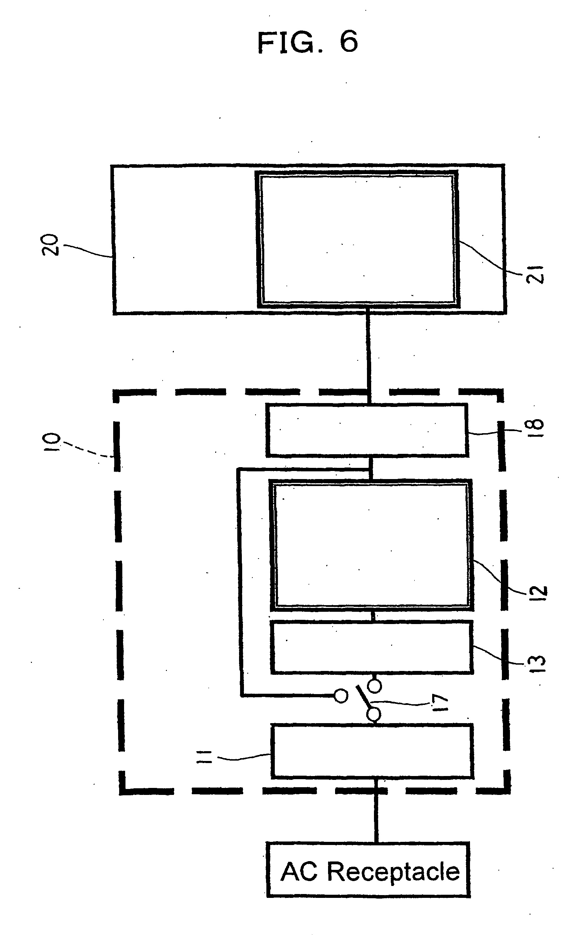

Fig. 6 illustrates a structure of a cordless instrumental system including a charger 10 and an induction rod 20 in accordance with the third embodiment. As the electrochemical capacitor in the storage part 21, two of the voltage 2.3V - 120F were connected in parallel. The direct current source 11 of the charger 10 is 12V, 5A, and the electrochemical capacitor of the storage part 12 is 5 series/2 parallel of 2.3V - 120F, and is 11.5V - 48F. Especially in this case, the storage part 12 of a charger 10 is constituted with an electrochemical capacitor.

In the third embodiment, the storage part 12 of a charger 10 is charged in advance from the direct current source 11. By attaching the induction rod 20 to the charger 10, the charge terminals 16 and 27 are connected. At first the charged electricity in the storage part 12 of a charger 10 is charged rapidly into the storage part 21 of the induction rod 20. According to this embodiment, the storage part 21 was a fully charged state in 10 seconds, and could be used for 3 hours.

(Fourth Embodiment) The fourth embodiment of the present invention is explained.

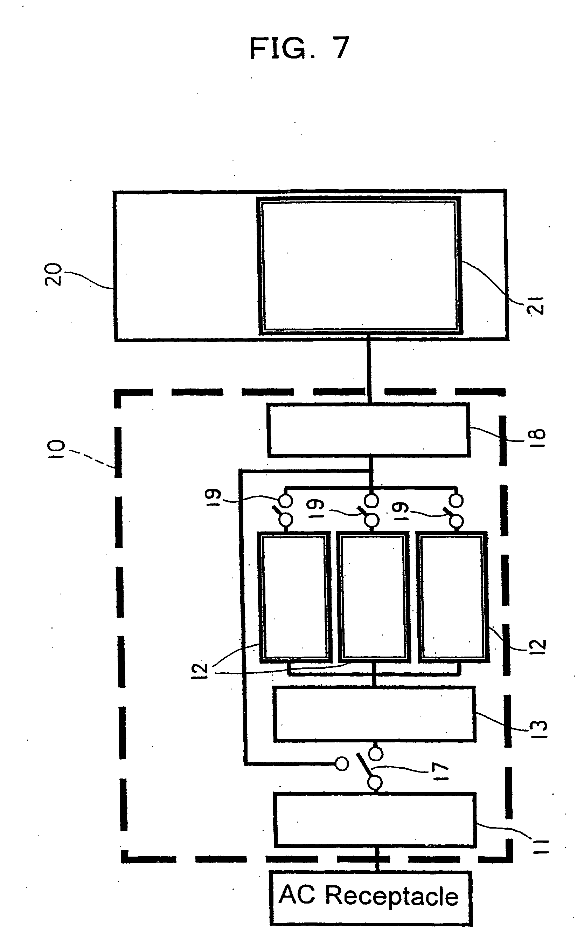

Fig. 7 illustrates a structure of a cordless instrumental system including a charger 10 and an induction rod 20 in accordance with the fourth embodiment. As the electrochemical capacitor in the storage part 21, two of the voltage 2.3V - 120F were connected in parallel. The direct current source 11 of the charger 10 is 12V, 5A, and the electric double-layer capacitor of the storage part 12 is 3 units connected in parallel, each unit being 5 series/3 parallel of 2.3V - 60F, being 11.5V - 48F. Especially in this case, the plural storage parts 12 of a charger 10 are connected in parallel, each of which is so constituted to select properly with a switch 19.

In the fourth embodiment, the storage part 12 of a charger 10 is charged in advance from the direct current source 11. By attaching the induction rod 20 to the charger 10, the charge terminals 16 and 27 are connected. At first the charged electricity in the storage part 12 of a charger 10 is charged rapidly into the storage part 21 of the induction rod 20. According to this embodiment, the storage part 21 was a fully charged state in 8 seconds, and could be used for 3 hours.

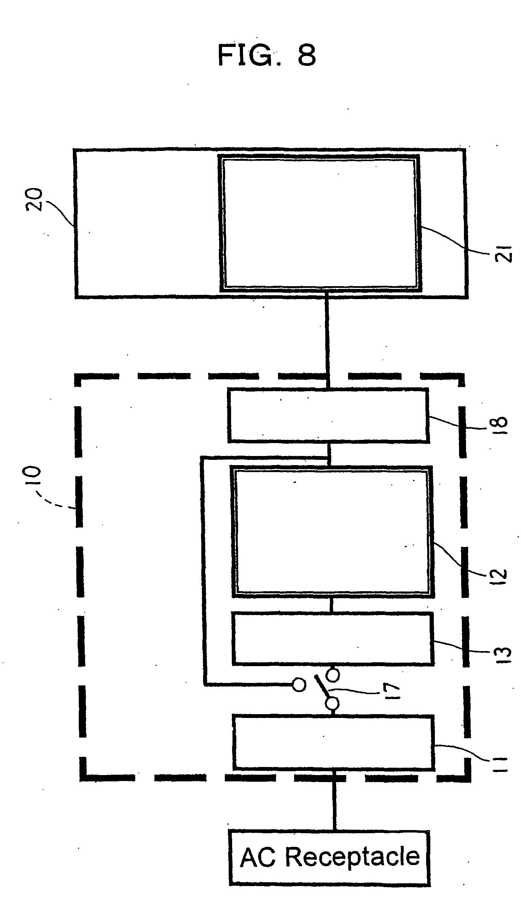

Here, a modified example of the fourth embodiment of the present invention is illustrated in Fig. 8. As the electric double-layer capacitor in the storage part 21, two of the voltage 2.3V - 120F were connected in parallel. The direct current source 11 of the charger 10 is 12V, 5A, and the electrochemical capacitor of the storage part 12 is 5 series/2 parallel of 2.3V - 120F, and is 11.5V - 48F.

In the above-mentioned modified example, the storage part 12 of a charger 10 is charged in advance from the direct current source 11. By attaching the induction rod 20 to the charger 10, the charge terminals 16 and 27 are connected. At first the charged electricity in the storage part 12 of a charger 10 is charged rapidly into the storage part 21 of the induction rod 20. According to this embodiment, the storage part 21 was a fully charged state in 6 seconds, and could be used for 1.5 hours.

Further in another modified example of the present invention, as the electric double-layer capacitor in the storage part 21, two of the voltage 2.3V - 60F were connected in parallel. The direct current source 11 of the charger 10 is 12V, 5A, and the electric double-layer capacitor of the storage part 12 is 5 series/4 parallel of 2.3V - 60F, and is 11.5V - 48F.

In the above-mentioned another modified example, the storage part 12 of a charger 10 is charged in advance from the direct current source 11. By attaching the induction rod 20 to the charger 10, the charge terminals 16 and 27 are connected. At first the charged electricity in the storage part 12 of a charger 10 is charged rapidly into the storage part 21 of the induction rod 20. In this example, the storage part 21 was a fully charged state in 6 seconds, and could be used for 1.5 hours.

(Fifth Embodiment) The fifth embodiment of the present invention is explained.

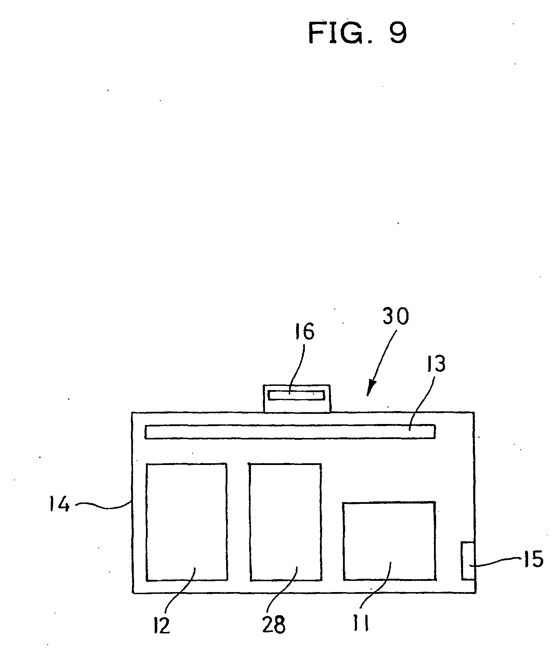

Fig. 9 illustrates a structural example of a charger 30 in accordance with the fifth embodiment of the present invention. The charger 30 comprises a direct current source 11 to generate direct current by being supplied with electricity from a domestic power source or the like, a storage part (the first storage part) 12 and the third storage part 28 chargeable from said direct current source 11, and a charge and discharge control circuit (the first charge and discharge control circuit) 13 to control charge and discharge of said storage parts 12 and 28. These are allocated in a box 14, and the direct current source 11 is supplied with electricity from a commercial power terminal 15. At the top of the box 14 is provided a charge terminal 16 connected to the induction rod 20.
In this connection, the concrete structural example of the cordless instrumental system in accordance with the fifth embodiment of the present invention is same as that illustrated in Fig.1, and the internal structure of an inductor as a cordless instrument is same as that illustrated in Fig.3, therefore an explanation is omitted.

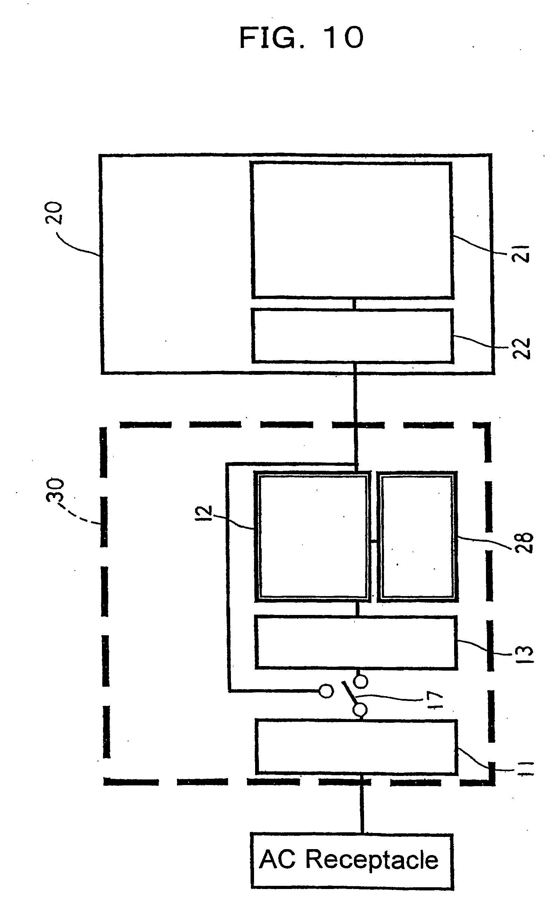

Fig. 10 illustrates a structure of a cordless instrumental system including a charger 30 and an induction rod 20. The storage part 21 of said induction rod 20 is constituted with an electrochemical capacitor. The electrochemical capacitor used here is also called a pseudo-capacity capacitor, and is that utilizing the pseudo-capacity by redox reaction with the oxides RuO2 and IrO2 of the platinoid elements Ru (rutenium) and Ir (iridium) as electrodes. The capacity twice as large or even more than that per unit volume of an electric double-layer capacitor has already been in practical use. The chargeability and dischargeability of large current are equal to those of an electric double-layer capacitor.

In this example as the electrochemical capacitor in the second storage part 21, two of the voltage 2.3V - 120F were connected in parallel. The direct current source 11 of the charger 10 is 12V, 2A, and the electric double-layer capacitor of the first storage part 12 is 11.5V - 24F by five of 2.3V - 60F connected in series as a unit, and further 2 of these units connected in parallel (hereinafter, such series-parallel connection is simply called 5 series/2 parallel.). Also, a nickel hydrogen battery of the third storage part 28 is used as 4 parallel 4.8V - 1600mAh of 1.2V - 1600mAh.

The first charge and discharge control circuit 13 and the second charge and discharge control circuit 22 control the voltage not to exceed the preset voltage (rated voltage) (overvoltage control function) upon charging the storage parts 12 or 21, respectively, and also control the preset voltage to be maintained (constant voltage control function) upon discharging from the first and the second storage parts 12 or 21.

In the above-mentioned aspect, the first and the third storage parts 12 and 28 of a charger 30 are charged in advance from the direct current source 11. By attaching the induction rod 20 to the charger 30, the charge terminals 16 and 27 are connected. At first the charged electricity in the storage part 12 of a charger 30 is charged rapidly into the second storage part 21 of the induction rod 20. And right after that, the first storage part 12 is charged from the third storage part 28. According to this embodiment, the storage part 21 was a fully charged state in 15 seconds, and could be used for 3 hours.

Upon charging from the first storage part 12 of a charger 30, if the second storage part 21 does not reach to the rated voltage, the charge circuit is controlled with the switch 17 to charge from the direct current source 11. And electricity keeps supplied into the second storage part 21 from the direct current source 11 till reaching the rated voltage, and the charge is completed. In this case, the switching timing from the charge from the first storage part 12 of a charger 30 to the direct current source 11 is preferably right before the current value of the first storage part 12 becomes just below the rated current value of the direct current source 11.

In the above-mentioned case, only an electric double-layer capacitor (or an electrochemical capacitor) is the first storage part 12 of a charger 30, and since an electric double-layer capacitor (or an electrochemical capacitor) of large capacity is needed to charge the second storage part 21 at the cordless instrument side, the charger 30 is made large in scale, and the cost is raised in some cases. On the other hand, when the capacity of an electric double-layer capacitor (or an electrochemical capacitor) is made small, the direct current source 11 of large capacity is needed to charge the storage part 21 at the cordless instrument side. In order not to make large the first storage part 12 and direct current source 11, the third storage part 28 is quite effective. Therefore, the capacities of the storage parts 12 and 28, and the capacity of direct current source 11 are to be in appropriate combination depending on the charging condition.

Also, in comparison with the storage part 21 at the cordless instrument side and the storage part 12 of a charger 30, the voltage of the storage part 12 of a charger 30 is preferably higher. The larger the voltage difference, the higher is the charging speed. As for capacity, that of the storage part 12 of a charger 30 is preferably higher, but it is no problem unless extremely smaller, for additional charging is possible from the direct current source 11.

In comparison with the direct current source 11 and the first and the third storage parts 12 and 28 built in a charger 30, the voltage of the direct current source 11 is preferably higher than the charge voltage of the storage parts 12 and 28. Its current value is preferably 1 to 10A, and more preferably 1.5 to 6A. If it is lower than 1A, the charging time to the storage part 12 built in a charger 10 or the storage part 21 at the cordless instrument side becomes long. If higher than 6A, the electric source becomes large in scale resulting in high cost.

(Sixth Embodiment) Next, the sixth embodiment of the present invention is explained.

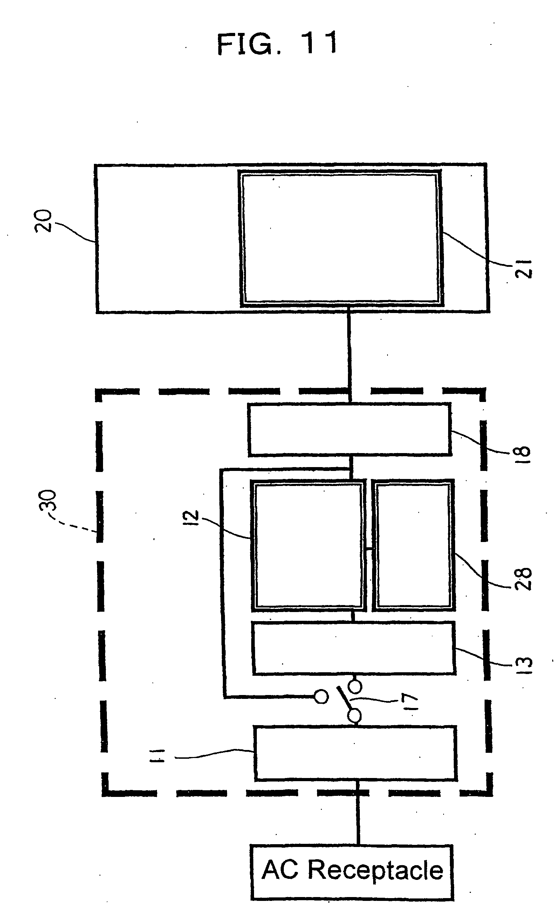

Fig. 11 illustrates the structure of a cordless instrumental system including a charger 30 and an induction rod 20 in accordance with this embodiment. As the electrochemical capacitor in the storage part 21, two of the voltage 2.3V - 120F were connected in parallel. The direct current source 11 of the charger 30 is 12V, 2A, and the electric double-layer capacitor of the first storage part 12 is 11.5V - 48F, the units connected in 5 series/4 parallel, each unit being 2.3V - 24F. A nickel hydrogen battery of the third storage part 28 is 4 of 1.2V - 1600mAh connected in series and in total 4.8V - 1600mAh. Especially in this case, the second charge and discharge control circuit 18 is included in a charger 10.

In the sixth embodiment, the first and the third storage parts 12 and 28 of a charger 30 are charged in advance from the direct current source 11. By attaching the induction rod 20 to the charger 30, the charge terminals 16 and 27 are connected. At first the charged electricity in the storage part 12 of a charger 30 is charged rapidly into the storage part 21 of the induction rod 20. Right after it, the storage part 12 is charged from the storage part 28. According to this embodiment, the storage part 21 was a fully charged state in 15 seconds, and could be used for 3 hours.

(Seventh Embodiment) Next, the seventh embodiment of the present invention is explained.

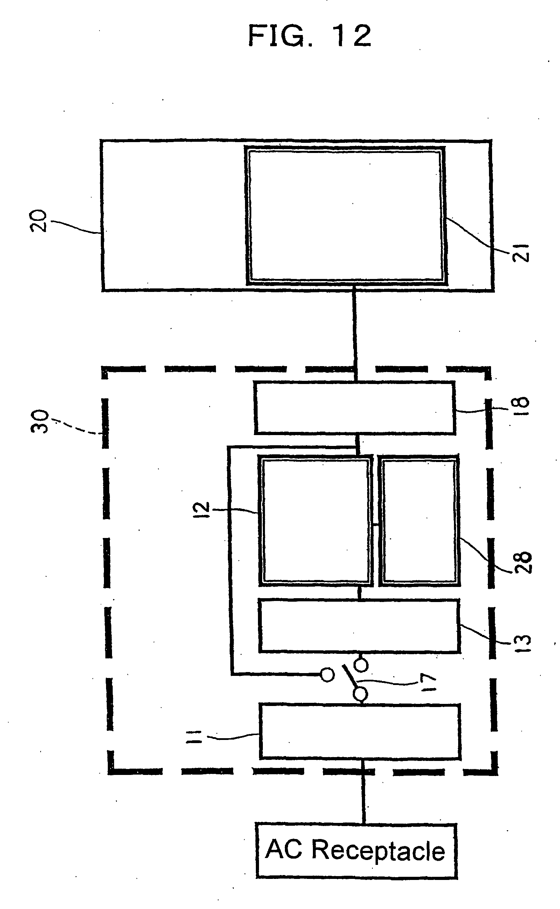

Fig. 12 illustrates the structure of a cordless instrumental system including a charger 30 and an induction rod 20 in accordance with this embodiment. As the electrochemical capacitor in the second storage part 21, two of the voltage 2.3V - 120F were connected in parallel. The direct current source 11 of the charger 30 is 12V, 5A, and the electrochemical capacitor of the first storage part 12 is 11.5V - 48F, the units connected in 5 series/2 parallel, each unit being 2.3V - 120F. Especially in this case, the storage part 12 in the charger 30 is made up of electrochemical capacitors.

In the seventh embodiment, the first and the third storage parts 12 and 28 of a charger 30 are charged in advance from the direct current source 11. By attaching the induction rod 20 to the charger 30, the charge terminals 16 and 27 are connected. At first the charged electricity in the first storage part 12 of a charger 30 is charged rapidly into the second storage part 21 of the induction rod 20. Right after it, the first storage part 12 is charged from the third storage part 28. According to this embodiment, the second storage part 21 was a fully charged state in 10 seconds, and could be used for 3 hours.

(Eighth Embodiment) Next, the eighth embodiment of the present invention is explained.

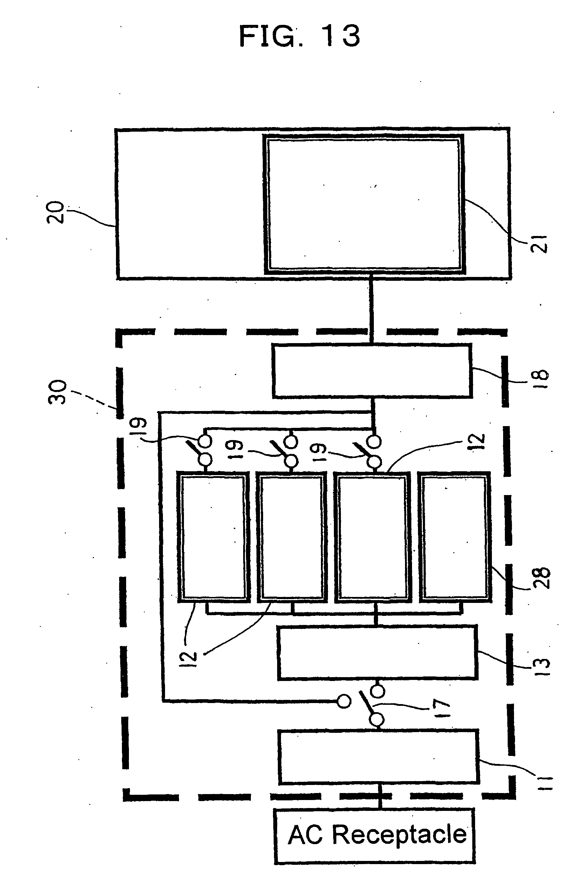

Fig. 13 illustrates the structure of a cordless instrumental system including a charger 30 and an induction rod 20 in accordance with this embodiment. As the electrochemical capacitor in the second storage part 21, two of the voltage 2.3V - 120F were connected in parallel. The direct current source 11 of the charger 10 is 12V, 5A, and the electric double-layer capacitor of the first storage part 12 is 3 units connected in parallel, each unit being 5 series/3 parallel of 2.3V - 60F, being 11.5V - 36F. Especially in this case, the plural storage parts 12 of a charger 30 is connected in parallel, each of which is so constituted as to select properly with a switch 19.

In the eighth embodiment, the storage parts 12 and 28 of a charger 30 are charged in advance from the direct current source 11. By attaching the induction rod 20 to the charger 30, the charge terminals 16 and 27 are connected. At first the charged electricity in the storage part 12 of a charger 30 is charged rapidly into the storage part 21 of the induction rod 20. Right after it, the storage part 12 is charged from the storage part 28. According to this embodiment, the storage part 21 was a fully charged state in 8 seconds, and could be used for 3 hours.

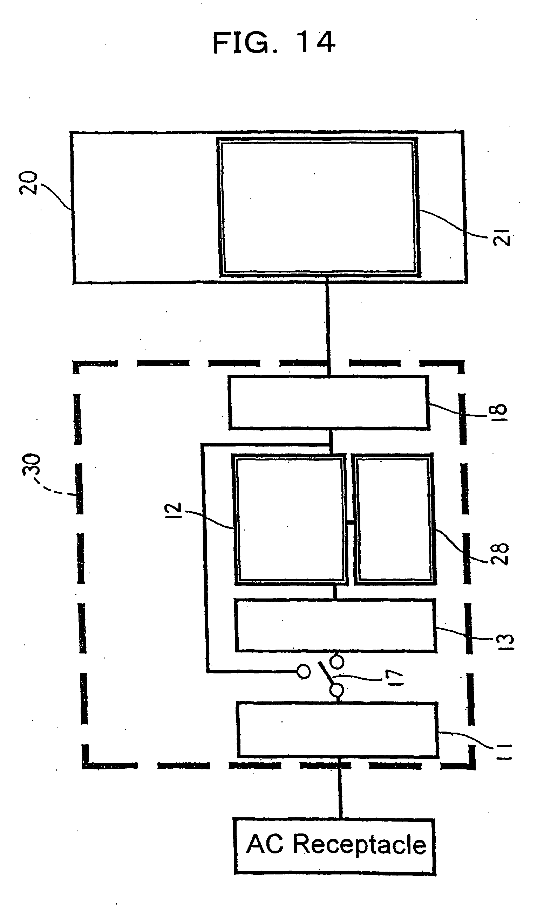

Here, Fig. 14 illustrates a modified example of the eighth embodiment. As the electric double-layer capacitor in the second storage part 21, two of the voltage 2.3V - 120F were connected in parallel. The direct current source 11 of the charger 30 is 12V, 5A, and the electrochemical capacitor of the first storage part 12 is 11.5V - 48F, the units connected in 5 series/2 parallel, each unit being 2.3V - 120F.
In this modified example, the storage parts 12 and 28 of a charger 30 are charged in advance from the direct current source 11. By attaching the induction rod 20 to the charger 30, the charge terminals 16 and 27 are connected. At first the charged electricity in the storage part 12 of a charger 30 is rapidly charged into the storage part 21 of the induction rod 20. Right after it, the storage part 12 is charged from the third storage part 28. According to this embodiment, the storage part 21 was a fully charged state in 6 seconds, and could be used for 1.5 hours.

(Ninth Embodiment) Next, the ninth embodiment of the present invention is explained in detail referring to a figure.

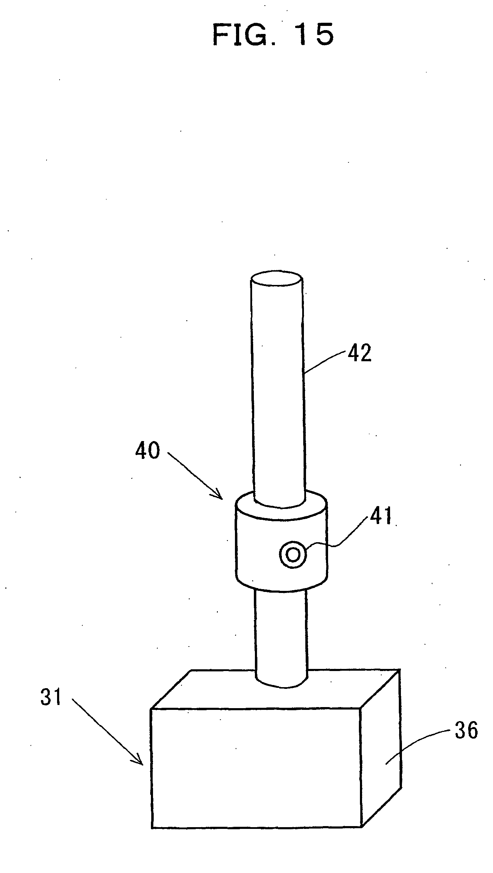

Fig. 15 is an external diagonal view illustrating a concrete structural example of a cordless instrumental system in accordance with the ninth embodiment of the present invention. According to this embodiment, a cordless instrument is so constituted as to have an induction rod 40 detachable from a charger 31, and to be charged with said induction rod 40 attached to the charger 31. The luminous part 42 of the induction rod 40 is lit on and off by the switch 41.

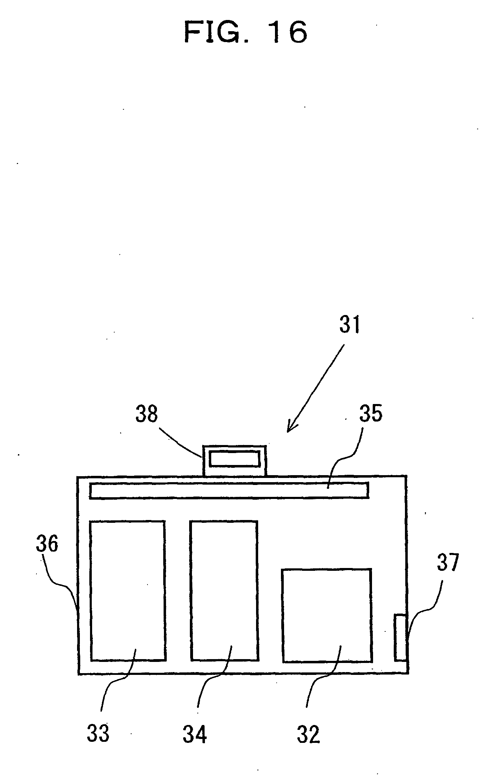

Fig. 16 is a cross-sectional view illustrating the structural example of the outline of a charger 31 shown in Fig. 15. The charger 31 comprises a direct current source 32, the first and the third storage parts 33 and 34 chargeable from said direct current source 32, and a charge and discharge control circuit 35. The direct current source 32 generates direct voltage and current by being supplied with electricity from commercial power source or others. These are allocated in a box 36, and the direct current source 32 is supplied with commercial electricity from a commercial power terminal 37. At the top of the box 36 is provided a charge terminal 38 connected upon attaching and detaching of the induction rod 40.

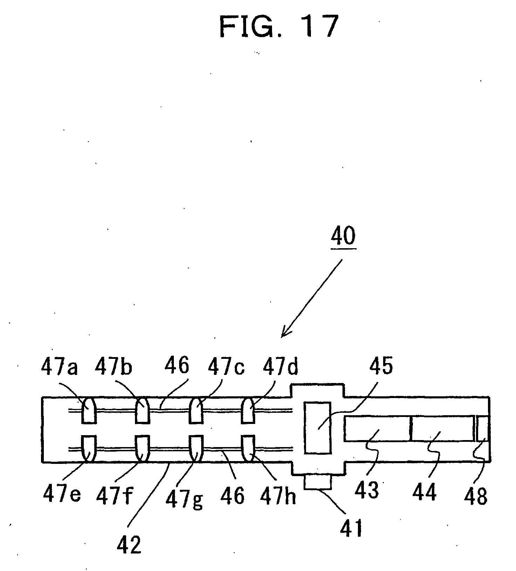

Fig. 17 is a cross-sectional view illustrating the outline of the structural example of an induction rod shown in Fig. 15. The induction rod 40 is shaped as a stick, and includes the second and the fourth storage parts 43 and 44, and a discharge control circuit 45 to control discharge of said storage parts 43 and 44. Inside a luminous part 42 are provided, for example, light emitting diodes (LED) 47 is series as a plurality of light sources to a retainer 46 as the supporting means. In this structural example, eight LED in total (47a - 47h), four each in each of two rows are provided in series. The LED 47 is lit on and off by the switch 41. Also, a charge terminal 38 detachable from a charger 31 for connection is provided at the right end of the induction rod in Fig. 17, which is a cross-sectional view rotated by 90 degrees with respect to Fig. 15.

Next, the operation of a cordless instrumental system is explained in accordance with the ninth embodiment in which the present invention is applied.

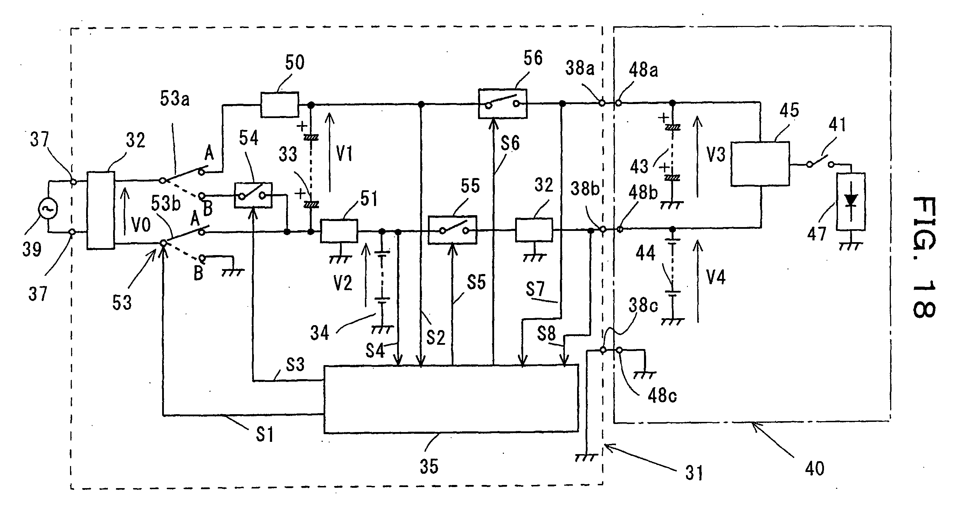

Fig. 18 is a block diagram illustrating the circuit structure of the cordless instrumental system including a charger 31 and an induction rod 40 in accordance with the ninth embodiment of the present invention. In Fig. 18, the region surrounded by dotted line shows the charger 31, and that surrounded by single dot chain line shows the induction rod 40. The charger 31 and the induction rod 40 are connected with charge terminals 38 (38a, 38b, 38c) and 48 (48a, 48b, 48c). The charger 31 is comprises direct current source 32, charge and discharge control circuit 35, and the first and the third storage parts 33 and 34, and others.

Here, the charge and discharge control circuit 35 comprises the charge control circuit 50 of the first storage part, the charge control circuit 51 of the third storage part, the charge control circuit 52 of the fourth storage part, and switching means 53, 54, 55, and 56, and others. The induction rod 40 comprises the switch 41 for on and off of LED 47, the second and the fourth storage parts 43 and 44, discharge control circuit 45, LED 47, and others.

First in the circuit structure of the charger 31, the charge circuit to the first storage part 33 is explained. The charge and discharge control circuit 35 outputs control signal S1 to control the switch 53, and commercial power source 39 connects the output V0 from the direct current source 32 connected thereto to the first storage part 33, and charges said first storage part 33. In case at the switch 53 of illustration in the figure, a switch 53a connects the plus terminal of direct current source 32 and the charge control circuit of the first storage part 50, and a switch 53b connects the minus terminal of direct current source 32 and the minus terminal of the first storage part 33. Relays and others can be used as the switch 53. The charge and discharge control circuit 35 is given information signal S2 about charge voltage and current of the first storage part 33.

The charge and discharge control circuit 50 of the first storage part is connected between the direct current source 32 and the first storage part 33. For the control in this case, the charge voltage control and overcurrent protection control to prevent overvoltage of the first storage part 33 are included. The charge and discharge control circuit 50 conducts charge control of the first storage part 33 based on the charge voltage of the first storage part 33 until the voltage reaches to a fully charged state of voltage V1. Here, IC (integrated circuit) or others having the constant voltage control function can be used as the charge control circuit 50 of the first storage part.

Next, a charge to the third storage part 34 is explained. When the charge to the first storage part 33 is finished, the charge and discharge control circuit 35 outputs control signal S1, and connects the switch 53 to B side shown with dotted line in the figure. Here, a switch 53a connects the plus terminal of direct current source 32 to one end of a switch 54. A switch 53b connects the minus terminal of direct current source 32 to the ground. Consequently, the minus terminal of direct current source 32 and the minus terminal of the third storage part 34 connected to the ground are connected. Here, the charge and discharge control circuit 35 lets on the switch 54 by outputting the output signal S3 to let on the switch 54, thereby connects the plus terminal of direct current source 32 and the charge control circuit of the third storage part 51. As such a switch 54, semiconductor switching devices such as bipolar transistor and MOSFET and relays can be used. By the actions of these switches 53 and 54, the direct current source 32 is connected to the third storage part 34 via the charge control circuit 51 of the third storage part. Said charge and discharge control circuit 35 is given information signal S4 about charge voltage and current of the third storage part 34.

For the control of charge control circuit 51 of the third storage part 34, charge voltage control and overcurrent protection control to prevent overvoltage of the third storage part 34 are included. The charge control circuit 51 of the third storage part conducts charge control of the third storage part 34 based on the charge voltage of the third storage part 34 until the voltage reaches to a fully charged state of voltage V2. IC (integrated circuit) or others having the constant voltage control function can be used as the charge control circuit 51 of the third storage part.

Next, the circuit to charge the second storage part 43 provided inside the induction rod 40 is explained. When the charge to the first and the third storage parts 33 and 34 is finished, the charge and discharge control circuit 35 outputs control signal S1 to operate the switch 53 not to connect direct current source 32 to the first and the third storage parts 33 and 34. Next, the charge and discharge control circuit 35 lets off the switch 55 by outputting the output signal S5, and further lets on the switch 56 by outputting the output signal S6. As such switches 55 and 56, semiconductor switching devices such as bipolar transistor and MOSFET and relays can be used. By these, the voltage of the first and the third storage parts 33 and 34 connected in series is applied to the second storage part 43 inside the induction rod 40.

In order to prevent overvoltage of the second storage part 43, the charge and discharge control circuit 35 is provided with information signal S7 about charge voltage of the second storage part 43. When the charge voltage signal S7 reaches to a fully charged state of V3, the charge and discharge control circuit 35 outputs the signal S6 to let switch 56 from on to off, and stops charging to the second storage part 43. Here, the first storage part 33 is about in the state of discharging.

Next, the charge circuit for the fourth storage part 44 provided inside the induction rod 40 is explained. When the charge to the second storage part 43 is finished, the charge and discharge control circuit 35 outputs control signal S6 to let off the switch 53 and then outputs control signal S5 to let on the switch 55. Thereby, electricity charged in the third storage part 34 charges the fourth storage part 44 inside the induction rod 40.

In order to prevent overvoltage of the fourth storage part 44, the charge and discharge control circuit 35 is provided with information signal S8 about charge voltage and current of the fourth storage part 44. For the control of charge control circuit 52 of the fourth storage part 44, charge voltage control and overcurrent protection control to prevent overvoltage of the fourth storage part 44 are included. The charge control circuit 52 of the fourth storage part 44 conducts charge control based on the charge voltage of the fourth storage part 44 until the voltage reaches to a fully charged state of V4. IC or others having the constant voltage control function can be used as the charge control circuit 52 of the fourth storage part 44.

As described above, the first and the third storage parts 33 and 34 inside the charger 31 are fully charged state by use of direct current source 32. And next, the second and the fourth storage parts inside the induction rod fully charged by use of the first and the third storage parts 33 and 34. In this state, the induction rod 40 is detached from the charger 31, and can be used as cordless.

Next, the circuit operation of the induction rod used as cordless is explained. When the switch 41 is on, the discharge control circuit 45 drives LED 47 by using the electricity charged in the second storage part 43. And when the voltage of the second storage part 43 becomes below the voltage needed to drive LED 47, the discharge control circuit 45 switches from the second storage part 43 to the fourth storage part 44 to drive LED 47.

In this case, the discharge control circuit 45 is provided with the voltage monitoring function of the second and the fourth storage parts 43 and 44, and constant voltage controlling function to maintain the preset value upon supplying electricity to LED 47. Also, the discharge control circuit 45 may be capable of such control functions as pulse driven LED's and lighting on in turn plural LED's at a certain time intervals.

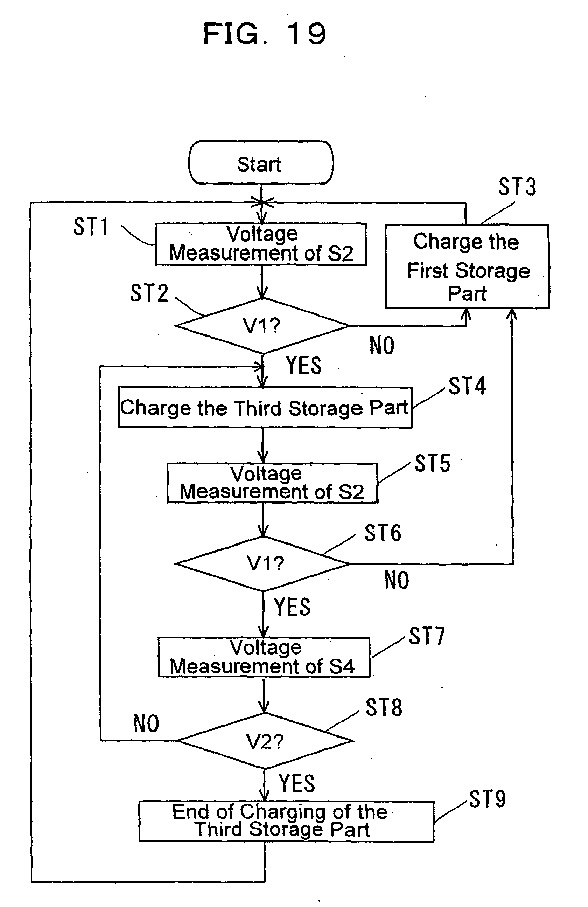

Here, charging to the first and the third storage parts 33 and 34 of the cordless instrumental system of the present invention is explained in more details. Fig. 19 is a flowchart illustrating the processing of a charge and discharge control circuit 35 controlling the charge of the first and the third storage parts 33 and 34 of a cordless instrumental system in accordance with the present invention.
First at step ST1, the voltage information of information signal S2 about the voltage of the first storage part 33 is measured, and at step ST2, it is judged whether the voltage of information signal S2 is charged or not to charge voltage V1 preset for the first storage part 33. And at step 2, if the voltage is judged as not to have reached to the preset charge voltage V1 for the first storage part 33, then it goes back to step ST3 to charge the first storage part 33. On the other hand, if the first storage part 33 is judged as charged to the preset charge voltage V1, then at step ST4, charging of the third storage part 34 begins.

And at step ST5, the voltage of information signal S2 is judged whether or not discharged below the preset charge voltage V1 for the first storage part 33. And at step ST6, if judged as not to have reached to the preset charge voltage V1 for the first storage part 33, then it goes back to step ST3 to charge the first storage part 33.
Next at step ST7, voltage of information signal S4 about the voltage of the third storage part 34 is measured, and at step ST8, it is judged whether the voltage of information signal S4 is charged or not to charge voltage V2 preset for the third storage part 34. And at step 8, if the voltage is judged as not to have reached to the preset charge voltage V2 for the third storage part 34, then it goes back to step ST4 to charge the third storage part 34. On the other hand at step ST8, if the third storage part 34 is judged as charged to the preset charge voltage V2, then at step ST9, charging of the third storage part 34 is stopped and goes back to step ST1.
Thus, a charge and discharge control circuit 35 conducts charge and discharge control of the first and the third storage parts 33 and 34.

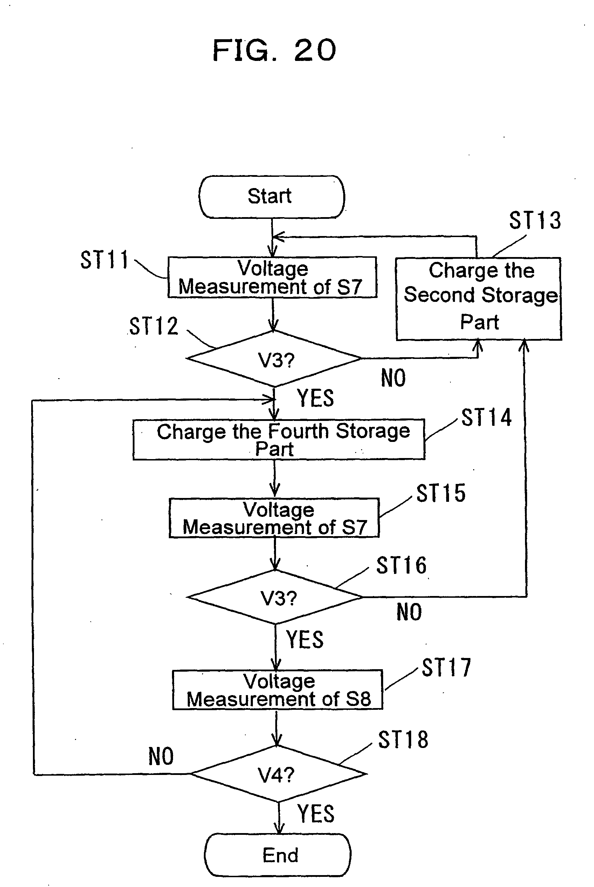

Next, charging to the second and the fourth storage parts 43 and 44 of the cordless instrumental system of the present invention is explained in more details. Fig. 20 is a flowchart illustrating the processing of a charge and discharge control circuit controlling the charge of the second and the fourth storage parts 43 and 44 of a cordless instrumental system in accordance with the present invention.
First at step ST11, the voltage of information signal S7 about the voltage of the second storage part 43 is measured, and at step ST12, it is judged whether the voltage of information signal S7 is charged or not to charge voltage V3 preset for the second storage part 43. And at step 12, if the voltage is judged as not to have reached to the preset charge voltage V3 for the second storage part 43, then it goes back to step ST13 to charge the second storage part 43. On the other hand at step ST12, if the second storage part 43 is judged as charged to the preset charge voltage V3, then at step ST14, charging of the fourth storage part 44 begins.

And at step ST15, the voltage of information signal S7 is judged whether or not discharged below the preset charge voltage V3 for the second storage part 43. And at step ST16, if judged as not to have reached to the preset charge voltage V3 for the second storage part 43, then it goes back to step ST13 to charge the second storage part 43.
Next at step ST17, voltage of information signal S8 about the voltage of the fourth storage part 44 is measured, and at step ST18, it is judged whether the voltage of information signal S8 is charged or not to charge voltage V4 preset for the fourth storage part 44. At step 18, if the voltage is judged as not to have reached to the preset charge voltage V4 for the fourth storage part 44, then it goes back to step ST14 to charge the fourth storage part 44. On the other hand at step ST18, if the fourth storage part 44 is judged as charged to the preset charge voltage V4, then at step ST18, charging of the fourth storage part 44 is stopped.
Thus, a charge and discharge control circuit 35 conducts charge and discharge control of the second and the fourth storage parts 43 and 44.

In the above-described aspect, the first storage part 33 of a charger 31 and the second storage part 43 of an induction rod 40 are preferably an electrochemical capacitor or an electric double-layer capacitor. The electrochemical capacitor is also called a pseudo-capacity capacitor, and is that utilizing the pseudo-capacity by redox reaction with the oxides RuO2 and IrO2 of the platinoid elements Ru (rutenium) and Ir (iridium) as electrodes. The capacity twice as large or even more than that per unit volume of an electric double-layer capacitor has already been in practical use. The chargeability and dischargeability in large current region of an electrochemical capacitor are equal to those of an electric double-layer capacitor. Also, the third storage part 34 of a charger 31 and the fourth storage part 44 of an induction rod 40 are preferably such batteries as chargeable and dischargeable nickel-hydrogen battery or the like.

Here, if only an electric double-layer capacitor or an electrochemical capacitor is used as the first storage part 33 of a charger 31, and the second storage part 43 and the fourth storage part 44 at the cordless instrument side are charged, then an electric double-layer capacitor or an electrochemical capacitor of large capacity is needed. In this case, charge current is large for rapid charge to the electric double-layer capacitor or others of large capacity, the direct current source 32 of the charger 10 is made large in scale, and the cost is raised in some cases. For this reason, in order not to make the first storage part 33 and the direct current source 32 large in scale, it is effective to use a battery of smaller charge current than an electric double-layer capacitor and others as the third storage part 34. Therefore, the capacities of the first and the third storage parts 33 and 34 and of the direct current source 32 are to be in appropriate combination depending on the charging and discharging condition of the second and the fourth storage parts 43 and 44 provided to the induction rod 40 as a cordless instrument.

Here, the charge voltage V1 of the first storage part 33 of a charger 31 is preferably higher than the charge voltage V3 of the second storage part 43 of an induction rod 40. The larger the voltage difference, the higher is the charging speed. Also, the capacity of the first storage part 33 of a charger 31 is preferably larger than that of the fourth storage part 44 of an induction rod 40 as a cordless instrument, but it is no problem unless extremely smaller, for additional charging is possible from the direct current source 32.

In comparison with the output voltage V0 of the direct current source 32, the charge voltage V1 of the first storage part 33, and the charge voltage V2 of the third storage part 34, the voltage V0 of the direct current source 32 is preferably higher than the voltages V1 and V2. Also, the output current of the direct current source is preferably such current value as to be capable of rapid charge to the electrochemical capacitor or the electric double-layer capacitor as the first and the second storage parts.

In order to apply conventional electrochemical capacitors or electric double-layer capacitors to such mobile type instrument as an induction rod, charge current may be, for example, 1 to 10A. It may be more preferably about 1.5 to 6A. In case of mobile instruments, If charge current to an electrochemical capacitor or an electric double-layer capacitor is lower than 1A, the charging time to the first storage part 33 built in a charger 31 or the second storage part 43 of an induction rod 40 becomes long. If higher than 6A, the direct current source becomes large in scale resulting in high cost.

The cordless instrumental system of the present invention is so constructed, and is used as described bellow. Here, an electrochemical capacitor is used as the first storage part 33 of the charger 31 and the second storage part 43 of an induction rod 40, and a nickel-hydrogen battery is used as a chargeable and dischargeable battery as the third storage part 34 of the charger 31 and the fourth storage part 44 of the induction rod 40.

First, the first and the third storage parts 33 and 34 of the charger 31 are connected to direct current source 32, respectively, via the charge and discharge control circuit 35, and are charge in advance to the voltages V1 and V2. Next, the charge terminal 48 of the induction rod 40 is attached to the charge terminal 38 of the charger 31. Here, the first and the third storage parts 33 and 34 of the charger 31 are connected in series via the charge and discharge control circuit 35, resulting in the voltage V1+V2. And the charge and discharge control circuit 35 rapidly charges the second storage part 43 of the induction rod 40 to the voltage V3 by using the first and the third storage parts 33 and 34 connected in series. The charge and discharge control circuit 35 charges the fourth storage part 44 to the voltage V4 when the rapid charging of the second storage part 43 is finished.

Thus, the second and the fourth storage parts of the induction rod 40 are full charged, and the charge terminal 48 of an induction rod 40 is detached from the charge terminal 38 of the charger 31. In this state, the induction rod 40 of the cordless instrument can be used as cordless. In this case, the LED drive circuit of the induction rod 40 first controls the lighting of LED 47 with the electrochemical capacitor of the second storage part 43 as the electric source, and next, when the voltage of the electrochemical capacitor becomes lower than the LED drive voltage, it drives LED 47 by using the electricity charged in the nickel-hydrogen battery as the fourth storage part 44.

The cordless instrumental system of the present invention is thus operated, and by connecting the induction rod 40 to the charger 31 and the charger 31 to the commercial power source 37, the charger 31 and each storage part (33, 34, 43, 44) of the induction rod 40 are full charged. In this state, the induction rod 40 can be used as cordless. In this case, if the charger 31 is carried around together with the induction rod 40, the second and the fourth storage parts 43 and 44 of the induction rod 40 can be recharged from the charger 31 when they run out of power. Thereby, since the cordless instrument 40 of the cordless instrumental system of the present invention is provided with rapidly chargeable and dischargeable electric double-layer capacitor or electrochemical capacitor and a battery, it is capable of rapid charging and discharging, and of long life use.

According to the ninth embodiment of the above-mentioned cordless instrumental system, concrete examples are described.

(Example 1) Inside of the charger 31 was composed as described below. The direct current source was 1.5V, 5A. The first storage part 33 was 9.2V - 30F with four electrochemical capacitors of 2.3V - 120F connected in series. The volume of one electrochemical capacitor was 10.2 ml (milliliter), and four make 40.8 ml.
The third storage part 34 was 12V - 1600mAh with 10 nickel-hydrogen batteries of 1.2V - 1600mAh connected in series. The volume of one nickel-hydrogen battery was 7.4 ml, and 10 make 74 ml.
Inside of an induction rod 40 was composed as described below. The second storage part 43 was 9.2V - 30F with four electrochemical capacitors of 2.3V - 120F connected in series. The volume of one electrochemical capacitor was 10.2 ml, and four make 40.8 ml.
The fourth storage part 44 was 8.4V - 1600mAh with seven nickel-hydrogen batteries of 1.2V - 1600mAh connected in series. The volume of one nickel-hydrogen battery was 7.4 ml, and seven make 51.8 ml.
In this Example 1, the second storage part 43 was a fully charged state in 3 seconds, and the drivable time of LED was 3 hours when only the second storage part 43 was used. And the continuous drivable time of LED was 110 hours when the nickel-hydrogen battery as the full charged fourth storage part 44 was used. Thereby, the volume of the electrochemical capacitor as the second storage part 43 at the induction rod 40 side is assumed as about 78% of the nickel-hydrogen battery as the fourth storage part 44, and a rapidly chargeable and dischargeable cordless instrumental system was realized.

(Example 2) The cordless instrumental system of same composition as in the above-described Example 1 was manufactured, except for the first storage part 33 inside a charger 31 was 9.2V - 30F with two units 4 series/2 parallel connected in parallel with a unit of four 2.3V - 60F electric double-layer capacitor connected in series.
In this case, the first storage part 33 inside the charger 31 was a fully charged state in 3 seconds, and the drivable time of LED was 3 hours when only the second storage part 43 was used. And the continuous drivable time of LED was 110 hours when the nickel-hydrogen battery as the full charged fourth storage part 44 was used.

The present invention is by no way limited to the above-described embodiments, and needless to say that various modification is possible within the scope of the present invention, which is also included in the range of the present invention. For example, the concrete numerical values of voltage or current or others explained in the embodiments mentioned above are shown as preferable, and can be modified depending on necessities. Also, an induction rod was mainly explained as a cordless instrument in the embodiments described above, but needless to say that the cordless instrumental system of the present invention is applicable to such portable electrical operation instruments as an electric shavers, an electric toothbrushes, small cleaners, electric drills, and others, and such portable informational instruments as personal computers, mobile phones, and PDA (personal digital assistant), and portable instruments handling music or image information using such optical or magnetic discs as CD, MD, and DVD, irrelevant of the kinds of various fields of use, thereby the same effect as the embodiments described above can be achieved.

### Industrial Applicability

As explained above according to the present invention, rapid charging is possible compared with the charging time of conventional secondary batteries, and such merits as long life use, compact size of a charger, and low cost are realized.

## Claims

1. A cordless instrumental system, in which a cordless instrument detachable from a charger is charged by attaching to said charger, comprising:
a first storage part chargeable from a direct current source included in said charger;
a first charge and discharge control circuit to control charge and discharge of said first storage part;
a second storage part included in said cordless instrument; and
a second charge and discharge control circuit to control charge and discharge of said second storage part;
and is capable of charging at least from said first storage part to said second storage part upon attaching said cordless instrument.

2. The cordless instrumental system as set forth in claim 1, **characterized in that** said first and second storage parts are constituted with an electric double-layer capacitor or an electrochemical capacitor.

3. The cordless instrumental system as set forth in claim 1 or 2, **characterized in that** said second storage part is chargeable from said first storage part or said direct current source.

4. The cordless instrumental system as set forth in claim 3, **characterized in that** the charging route to said second storage part is switched to either said first storage part or said direct current source depending upon the charge output of said first storage part.

5. The cordless instrumental system as set forth in any one of claims 1 to 4, **characterized in that** said second charge and discharge control circuit is included either in said cordless instrument or in said charger.

6. The cordless instrumental system as set forth in any one of claims 1 to 5, **characterized in that** a plurality of said first storage parts are parallelly connected to said direct current source.

7. A cordless instrumental system in which a cordless instrument detachable from a charger is charged by attaching to said charger, comprising:
a first storage part chargeable from a direct current source included in said charger;
a third storage part chargeable from the direct current source, and chargeable to said first storage part;
a first charge and discharge control circuit to control charge and discharge of said first and third storage parts;
a second storage part included in said cordless instrument; and
a second charge and discharge control circuit to control charge and discharge of said second storage part;
and is capable of charging at least from said first storage part to said second storage part upon attaching said cordless instrument.

8. The cordless instrumental system as set forth in claim 7, **characterized in that** said first and second storage parts are constituted with an electric double-layer capacitor or an electrochemical capacitor.

9. The cordless instrumental system as set forth in claim 7 or 8, **characterized in that** said third storage part is constituted with a chargeable battery.

10. The cordless instrumental system as set forth in any one of claims 7 to 9, **characterized in that** said third storage part is chargeable from said direct current source.

11. The cordless instrumental system as set forth in any one of claims 7 to 10, **characterized in that** said second storage part is chargeable from said first storage part or said direct current source.

12. The cordless instrumental system as set forth in any one of claims 7 to 11, **characterized in that** the charging route to said second storage part is switched to said first storage part or to said direct current source depending upon the charge output of said first storage part.

13. The cordless instrumental system as set forth in any one of claims 7 to 12, **characterized in that** said third charge and discharge control circuit is included either in said cordless instrument or in said charger.

14. The cordless instrumental system as set forth in any one of claims 7 to 13, **characterized in that** a plurality of said first storage parts are parallelly connected to said direct current source.

15. A cordless instrumental system, in which a cordless instrument detachable from a charger including a direct current source is attached to said charger and is charged, comprising:
a first and the third storage parts chargeable from said direct current source, and provided in said charger;
a second and the fourth storage parts included in said cordless instrument;
a charge and discharge control circuit to control charge and discharge of said first to fourth storage parts; and
a discharge control circuit to control discharge of said second and fourth storage parts;
and is capable of charging at least from said first and third storage parts to said second storage part, as well as of charging from said third storage part to said fourth storage part, upon attaching said cordless instrument.

16. The cordless instrumental system as set forth in claim 15, **characterized in that** said first and second storage parts are constituted with an electric double-layer capacitor or an electrochemical capacitor.

17. The cordless instrumental system as set forth in claim 15 or 16, **characterized in that** said third and fourth storage parts are constituted with a battery.

18. The cordless instrumental system as set forth in any one of claims 15 to 17, **characterized in that** said second storage part is chargeable from either of said first or third storage parts, or from the combination thereof.

19. The cordless instrumental system as set forth in any one of claims 15 to 18, **characterized in that** said fourth storage part is chargeable from said third storage part.

20. The cordless instrumental system as set forth in any one of claims 15 to 19, **characterized in that** said discharge control circuit to control discharge of the second and the fourth storage parts is included in said cordless instrument.
